# EUROPÄISCHE PATENTSCHRIFT

(11) **EP 0 836 093 B1**
(45) Veröffentlichungstag und Bekanntmachung des Hinweises auf die Patenterteilung: **18.02.2004**
(21) Anmeldenummer: 97115226.9
(22) Anmeldetag: 03.09.1997
(51) Int. Cl.: G01N 21/88, G01B 11/24, B23K 9/095

(54) **Verfahren und Anordnung zur optischen Schweissnahtprüfung**
Method and apparatus for optical weld inspection
Procédé et dispositif de contrôle optique de soudures

(30) Priorität: 10.10.1996 CH 246996
(43) Veröffentlichungstag der Anmeldung: 15.04.1998
(73) Patentinhaber: ELPATRONIC AG, 8962 Bergdietikon (CH)
(72) Erfinder: Burri, Karl-Georg, 8942 Oberrieden (CH); Buchmann, Christa, 8424 Embrach (CH)

(56) Entgegenhaltungen:
- EP-A- 0 532 257
- EP-A- 0 574 336
- EP-A- 0 708 325
- US-A- 5 105 149

## Beschreibung

Die Erfindung betrifft ein Verfahren gemäss Oberbegriff des Anspruchs 1 sowie eine Anordnung gemäss Oberbegriff des Anspruchs 8.

Es ist bekannt, Bleche durch Schweissung zu grösseren Bauteilen (sogenannte tailored blanks) zu verschweissen, welche anschliessend einem Umformungsprozess unterworfen werden. Ein Anwendungsgebiet von solchen "tailored blanks" liegt z.B. in der Automobilindustrie. Die Verschweissung der Bleche kann durch Quetschnahtschweissen und Laserschweissen erfolgen. Da die Schweissnaht zusammen mit den Blechen dem Umformungsprozess unterworfen ist, ist eine einwandfreie Qualität der gesamten Naht wesentlich. Die zu verschweissenden Bleche werden mit ihren gemeinsamen Kanten aneinanderliegend der Schweissstelle zugeführt, wobei es wichtig ist, dass der fokussierte Laserstrahl möglichst genau der gemeinsamen Kante der aneinanderliegenden Bleche folgt. Zu diesem Zweck werden Einrichtungen eingesetzt, die den genauen Kantenverlauf vor der Schweisszone ermitteln, wodurch der Laserstrahl bei der Schweissung entsprechend geführt werden kann. Eine bekannte Einrichtung projiziert zu diesem Zweck ein Linienmuster konstanter Intensität quer über die Kante, welches Muster von einer Kamera aufgenommen wird, deren Bild von einem Rechner ausgewertet wird, um aus dem Verlauf mindestens einer der Linien auf den Verlauf der Kante bzw. des Spaltes zwischen den Blechen an diesem Ort zu schliessen. Auf diese Weise werden die Kante und der Spalt entlang seiner ganzen Länge, vor der Schweisszone verfolgt und der Laserstrahl zur Schweissung entsprechend gesteuert.

Es ist weiter bekannt, auf grundsätzlich die gleiche Weise die Schweissnaht nach der Schweissung optisch zu prüfen. In diesem Fall wird eine Linie oder werden mehrere Linien aus Licht ebenfalls quer (rechtwinklig oder schräg) zur Schweissnaht auf diese projiziert und eine Kamera nimmt von oben ein Bild des Linienverlaufs der projizierten Linien auf. Das aufgenommene Bild wird mittels bekannter Bildverarbeitungsmethoden von einem Rechner ausgewertet, um allfallige Fehler der Naht zu erkennen, die den Verlauf der Linie stören. Je nach Ausgestaltung der Naht, des Dickenunterschiedes der Bleche, deren Reflektivität und der Art eines allfälligen Schweissfehlers ist es möglich, dass die beschriebene optische Schweissnahtprüfung einen vorhandenen Fehler nicht klar zu erkennen vermag oder dass bei der Auswertung eine relativ grosse Unsicherheit über das Vorliegen eines Fehlers entsteht.

Der Erfindung liegt deshalb die Aufgabe zugrunde, eine optische Schweissnahtprüfung zu schaffen, welche die bessere und sichere Erkennung allfälliger Schweissfehler ermöglicht.

Dies wird bei dem eingangs genannten Verfahren mit den kennzeichnenden Merkmalen des Anspruchs 1 erreicht bzw. bei der eingangs genannten Anordnung mit den kennzeichnenden Merkmalen des Anspruchs 8.

Dadurch, dass neu zusätzlich eine seitliche Ansicht des Schweissnahtbereiches mit dem Linienmuster aufgenommen und ausgewertet wird, lässt sich die Erkennung von Fehlern klar verbessern. Es kann eine vollständige optische Kontrolle der Naht erzielt werden, was bis anhin nicht möglich war, da die steil abfallenden Bereiche der Naht bei der Ansicht von oben nicht genügend erkennbar waren. Die gute Erkennbarkeit von Fehlern ergibt sich mit der zusätzlichen Seitenansicht auch bei einem grossen Dickeunterschied der Bleche. Ferner können auch in der Ansicht von oben sehr dunkel erscheinende Nähte durch die zweite Ansicht von der Seite besser analysiert werden. Generell ergibt sich eine zuverlässigere optische Qualitätsprüfung unabhängig von der Nahtgeometrie und den Blechdicken und durch die teilweise redundante Auswertung der Ansicht von oben und von der Seite.

Bei einer Ausführungsart der Erfindung wird die seitliche Ansicht mit einer zweiten Kamera erzeugt und die Bilder der beiden Kameras werden entweder separat ausgewertet oder in gemeinsamer Darstellung auf elektronische Weise in ein Bild gebracht und zusammen ausgewertet.

Bei einer bevorzugten Ausführungsart wird indes die seitliche Ansicht von derselben Kamera aufgenommen, welche auch die Ansicht von oben aufnimmt, so dass beide Ansichten von der selben Bildverarbeitungs- bzw. Auswerteinrichtung auf einfache Weise sequentiell oder gleichzeitig ausgewertet werden können.

Vorzugsweise erfolgt die Aufnahme beider Ansichten mittels einer herkömmlich senkrecht oberhalb der Schweissnaht stehenden Kamera, der die seitliche Ansicht über mindestens ein optisches Element vermittelt wird. Bei einer weiteren bevorzugten Ausführungsart können auch die Linien aus Licht über das mindestens eine optische Element auf die Naht projiziert werden. Es können ferner mehrere Linien unterschiedlicher Intensität verwendet werden, was die Auswertung bei unterschiedlicher Reflektivität der Blechoberfläche verbessern kann.

Im folgenden werden Ausführungsbeispiele der Erfindung anhand der Zeichnungen näher erläutert.
Dabei zeigt
- Figur 1: schematisch eine bekannte Anordnung einer Kamera und eines Linienprojektors zur Schweissnahtkontrolle;
- Figur 2: eine schematische Darstellung mit einer Vorrichtung zur Kantenverfolgung und zwei Vorrichtungen zur Schweissnahtprufung;
- Figur 3: schematisch eine Anordnung gemäss der Erfindung mit zwei Kameras;
- Figur 4: schematisch den Schweissnahtbereich und ein optisches Element zur Aufnahme der seitlichen Ansicht und der Ansicht von oben mit einer Kamera;
- Figur 5: schematisch eine weitere Ausführungsform der Erfindung mit optischen Elementen;
- Figur 6: schematisch eine weitere Ausführungsform mit optischen Elementen;
- Figur 7: noch eine Ausführungsform mit optischen Elementen,
- Figur 8: ebenfalls eine Ausführungsform mit optischen Elementen, und
- Figur 9 a-c: eine Ausführungsform, bei welcher auch die Linienprojektion über das optische Element erfolgt.

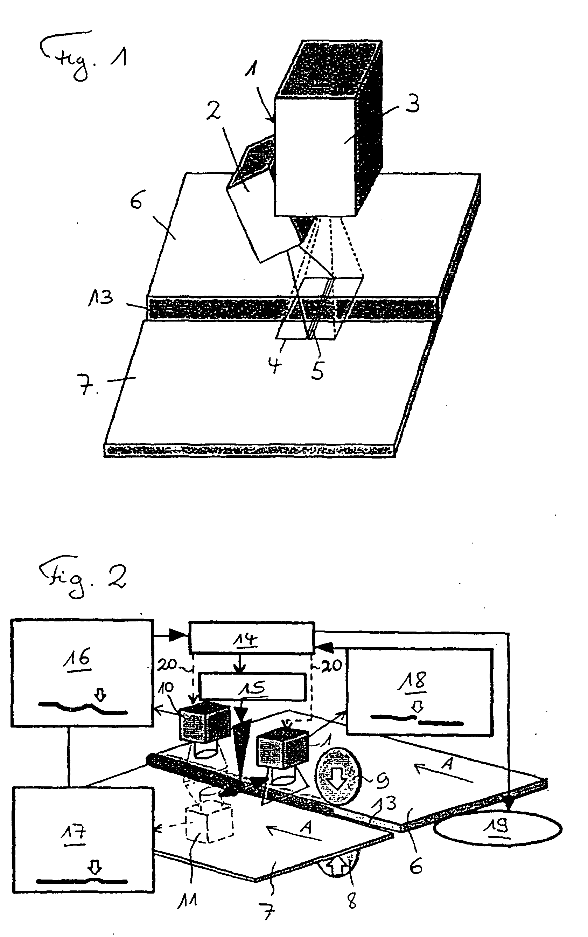

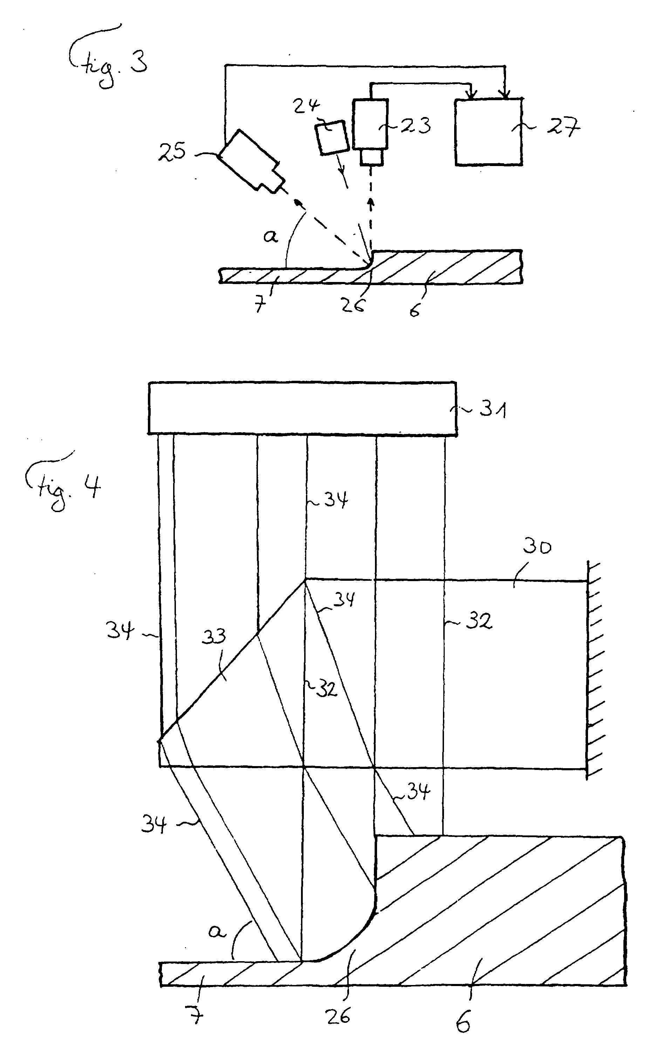

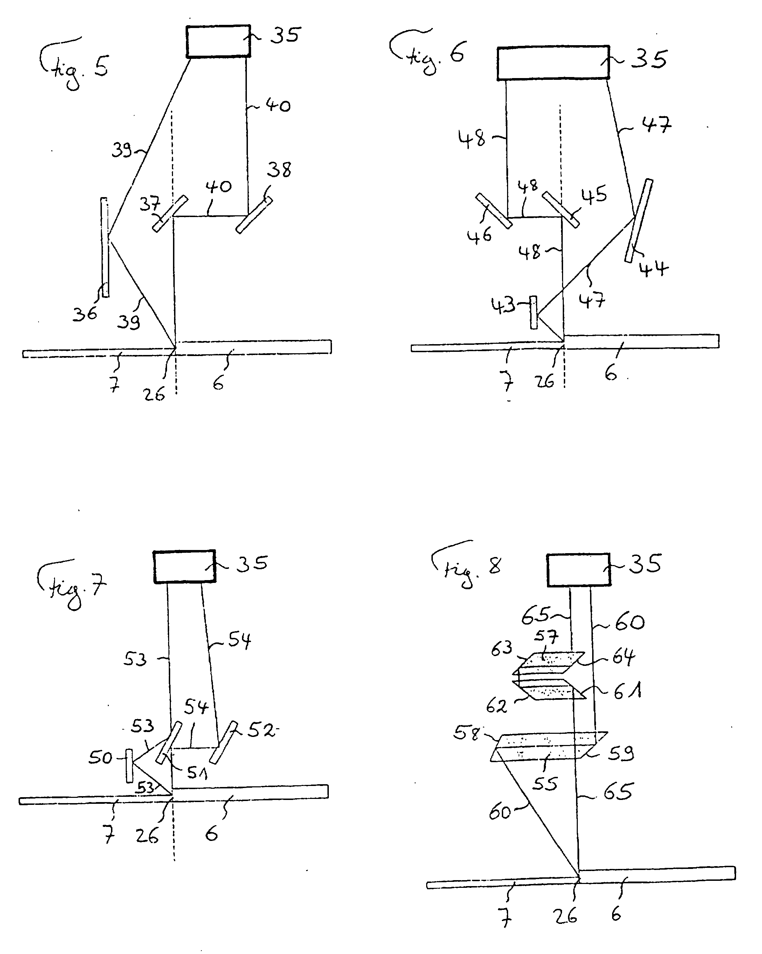

In Figur 1 und 2 sind zwei Bleche 6 und 7 gezeigt, welche aneinander anliegen und eine gemeinsame Kante 13 aufweisen. Diese Bleche werden entlang der Kante 13 z.B. durch Laserschweissung miteinander verbunden. Zur Verfolgung des Kantenverlaufs bzw. vorliegend zur Prüfung der Schweissnaht ist es bekannt, mehrere Linien 5 aus Licht quer zur Kante 13 auf diese und den benachbarten Bereich der beiden Bleche zu projizieren. In dem gezeigten Beispiel sind lediglich 3 Linien dargestellt, es könnte sich aber auch um eine andere Anzahl Linien handeln. Die Linien verlaufen im 90°-Winkel oder schräg zur Kante 13 und befinden sich innerhalb des Erfassungsbereiches einer Aufnahmeeinrichtung 3, welche insbesondere von einer CCD-Kamera gebildet sein kann. Der Projektor 2 für die Projektion der Linien 5 wird vorzugsweise von einer Laserlichtquelle gebildet, hinter welcher ein Beugungsgitter angeordnet ist, das die Linien 5 als Beugungslinien erzeugt. Das von der Kamera 3 erfasste Bild wird in einer Bildauswerte-Einrichtung ausgewertet, um mittels des Verlaufs mindestens einer der Linien 5 den Verlauf des Spaltes zwischen den Blechen 6 und 7 entlang der Kante 13 zu bestimmen, bzw. um vorliegend nach der Verschweissung der Bleche den Verlauf und Zustand der Schweissnaht zu bestimmen. Figur 2 zeigt eine solche Vorrichtung, bei welcher mehrere Anordnungen nach Stand der Technik gemäss Figur 1 vorgesehen sind, nämlich eine Anordnung 1 vor der Schweisszone und zwei Anordnungen 10 und 11 nach der Schweisszone. In Figur 2 ist ersichtlich, dass die Bleche 6 und 7, welche z.B. in Schweissrichtung eine Länge von 2 m aufweisen können, durch eine nicht gezeigte Fördereinrichtung in Richtung der Pfeile A in zueinander genau fixierter Stellung durch die Vorrichtung gefördert werden. Vor der Kantenverfolgungsvorrichtung 1 kann eine Umformungseinrichtung mit den Rollen 8 und 9 vorgesehen sein, welche durch Verformen des dickeren Bleches 6 den zwischen den Blechen bestehenden Spalt möglichst verkleinert. Der genaue Verlauf des Spaltes wird dann durch die Kantenverfolgungseinrichtung 1 festgestellt, indem diese, wie bereits beschrieben, ein Linienmuster quer zur Kante 13 über diese projiziert und mittels einer Kamera das Linienmuster erfasst und ausgewertet wird. Durch die Projektionseinrichtung können z.B. fünf parallel verlaufende Linien über die Kante projiziert werden. Das Bild aus der Kamera der Anordnung 1 gelangt zu einer Auswerteinrichtung 18, welche den genauen Verlauf des Spaltes bestimmt. Von der Auswerteinrichtung 18 gehen Steuersignale an eine Steuereinrichtung 14, welche ihrerseits die Laserlichtquelle 15 so steuert, dass der nur schematisch dargestellte Laserlichtstrahl 19 zur Verschweissung der Bleche 6 und 7 genau dem Verlauf des Spaltes entlang der Kante 13 folgt. Nach der Schweisszone, d.h. in Förderrichtung, hinter dem Laserstrahl 19 ist eine Anordnung 10 gemäss derjenigen von Figur 1 oberhalb der Schweissnaht angeordnet und eine Anordnung 11 gemäss derjenigen von Figur 1 unterhalb der Bleche. Diese beiden Anordnungen projizieren ebenfalls Linien quer zur Kante 13 bzw. zur Schweissnaht. Aus dem Bild der Linien können die Auswerteinrichtungen 16 bzw. 17 den Verlauf der Schweissnaht bestimmen und damit eine optische Schweissnahtkontrolle auf verschiedene Arten von Fehlern hin durchführen, was an sich bekannt ist. Die Auswerteinrichtungen 16 und 17 geben ein entsprechendes Signal an die Steuereinrichtung 14 ab und diese kann an eine übergeordnete Steuerung 19 ein Signal abgeben, ob die aus den Blechen 6 und 7 zusammengeschweisste Platine den Qualitätsanforderungen genügt oder nicht. Anstelle der beiden Auswerteinrichtungen 16 und 17, kann natürlich auch eine gemeinsame Auswerteinrichtung vorgesehen sein oder die Auswertung kann in die Steuereinrichtung 14 integriert sein. Gemäss der vorliegenden Erfindung erfolgt nun mit den Anordnungen 10 und 11 nicht nur eine Ansicht von oben auf die Schweissnaht, sondern auch von der Seite. In Figur 3 ist grob schematisch eine solche Anordnung dargestellt, wobei wiederum die Bleche 6 und 7 (teilweise und geschnitten) im verschweissten Zustand dargestellt sind. Oberhalb der Bleche 6 und 7 sind eine erste Kamera 23 und der Linienprojektor 24 angeordnet. Weiter ist in dieser Ausführungsform eine zweite Kamera 25 vorgesehen, welche seitlich auf die Naht 26 blickt. Die Kamera 25 ist dabei z.B. in einem Winkel a von 45° gegenüber der Blechebene geneigt. Die Bilder beider Kameras werden in einer Auswerteinrichtung 27 ausgewertet, wobei die beiden Bilder der Naht zur Auswertung auch elektronisch zu einem Bild kombiniert werden können. Der Betrachtungswinkel a kann auch abweichend von 45° gewählt werden und z.B. im Bereich von 0-85° liegen. Die zweite Kamera blickt vorzugsweise an derselben Stelle auf den Nahtbereich, wie die erste Kamera und damit auf die projizierten Linien. Es ist aber natürlich auch möglich, dass die zweite Kamera an einer anderen Stelle auf die Naht blickt, wobei dann ein weiterer Linienprojektor vorgesehen sein müsste, um auch an dieser Stelle ein Linienmuster zu erzeugen. Auch bei der Auswertung müsste in Betracht gezogen werden, dass die beiden Bilder nicht von derselben Nahtstelle stammen.

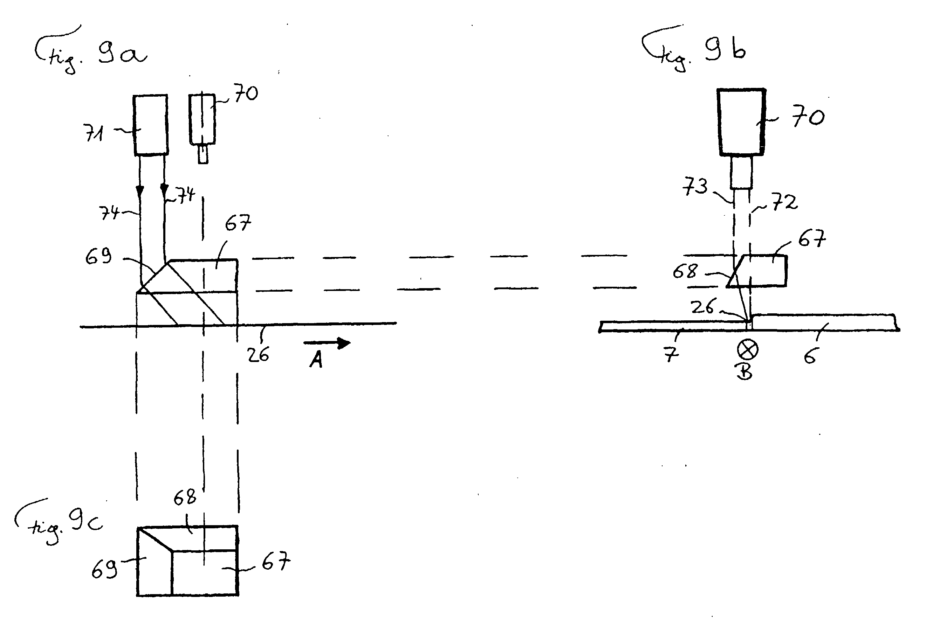

Figur 4 zeigt eine weitere Ausführungsform, bei welcher beide Ansichten von nur einer Kamera auf ein Bild aufgenommen werden. Die Bleche 6 und 7 sind erneut geschnitten und nur teilweise dargestellt, die Schweissnaht ist mit 26 bezeichnet. Ein optisches Element 30, welches in diesem Fall ein Prisma ist, ist zwischen der Kamera 31, welche nur schematisch als Block dargestellt ist und den Blechen 6,7 angeordnet und in nicht dargestellter Weise befestigt. Die Kamera 31 blickt einerseits senkrecht durch das Element 30 nach unten auf die Naht bzw. auf die dorthin projizierten Linien, was durch den Strahlengang 32 angedeutet ist. Der Linienprojektor ist in dieser Darstellung nicht gezeigt. Andererseits blickt dieselbe Kamera 31 über den abgeschrägten Teil 33 des optischen Elementes 30 unter einem Winkel a von ca. 62° seitlich auf die Naht 26 (Strahlengang 34), wobei beide Ansichten im selben Kamerabild vorliegen und zusammen von der nicht dargestellten Auswerteinrichtung ausgewertet werden können. Natürlich kann auch hier durch entsprechende Ausgestaltung des Elementes ein anderer Betrachtungswinkel gewählt werden.

Die Figuren 5,6,7 und 8 zeigen ebenfalls Ausführungsformen mit je einer Kamera 35, wobei als optische Elemente Spiegel vorgesehen sind. Der Linienprojektor und die Auswerteinrichtung sind jeweils zur Vereinfachung der Zeichnung nicht dargestellt. In Figur 5 ist ein Spiegel 36 für die seitliche Ansicht (Strahlengang 39) vorgesehen und die Spiegel 37 und 38 für die Ansicht von oben (Strahlengang 40). In Figur 6 erfolgt die seitliche Ansicht der Naht 26 über Spiegel 43 und 44 (Strahlengang 47) und die Ansicht von oben über die Spiegel 45 und 46 (Strahlengang 48). In Figur 7 ist für die seitliche Ansicht der Spiegel 50 und der (beidseitig verspiegelte) Spiegel 51 vorgesehen (Strahlengang 53). Die Ansicht von oben erfolgt über die zweite Spiegelfläche des Spiegels 51 und über den Spiegel 52 (Strahlengang 54). In Figur 8 sind Glaskörper 55, 56 und 57 mit Spiegelflächen vorgesehen. Die seitliche Ansicht erfolgt dabei mit den Spiegelflächen 58 und 59 des Körpers 55 (Strahlengang 60). Um einen gleich langen Strahlengang für die Ansicht von oben zu erzielen, sind dafür die Körper 56 und 57 mit den Spiegelflächen 61-64 vorgesehen (Strahlengang 65).

Die Figuren 9a bis 9c zeigen in seitlicher Ansicht von zwei verschiedenen Seiten (9a, 9b) und in Draufsicht (9c) eine Ausführung mit einem Prisma 67 mit zwei Prismenflächen 68 und 69, wobei die Projektion der Lichtlinien ebenfalls über das Prisma erfolgt. Es ist eine Kamera 70 vorgesehen, welche über die gerade Fläche des Prismas 67 von oben auf die Schweissnaht 26 der Bleche 6,7 blickt (Strahlengang 72), und über die Prismenfläche 68 seitlich auf die Naht 26 blickt (Strahlengang 73) was in Figur 9b gezeigt ist, wo die Schweissrichtung gemäss Pfeil B senkrecht zur Zeichnungsebene verläuft. Der Linienprojektor 71 projiziert die Linien über die Prismenfläche 69 (Strahlengang 74) auf die Naht 26, so dass die Linien senkrecht zur Zeichenblattebene über die Naht verlaufen. Pfeil A gibt die Schweissrichtung an. Figur 9c zeigt die entsprechende Ansicht von oben auf das Prisma 67.

## Patentansprüche

1. Verfahren zur Schweissnahtprüfung bei der Schweissverbindung von Blechen (6,7) entlang einer gemeinsamen Kante, wobei Licht in der Form von mindestens einer quer über die Naht verlaufenden Linie (5) auf die Bleche (6,7) projiziert wird und eine von einer Kamera (23, 35, 70) aufgenommene Ansicht von oben auf die Schweissnaht (26) ausgewertet wird, **dadurch gekennzeichnet, dass** zusätzlich eine seitliche Ansicht des Nahtbereiches aufgenommen und ausgewertet wird.

2. Verfahren nach Anspruch 1, **dadurch gekennzeichnet, dass** die seitliche Ansicht von einer zweiten Kamera (25) aufgenommen wird, und dass die aufgenommenen Bilder beider Kameras (23,25) separat oder in gemeinsamer Darstellung ausgewertet werden.

3. Verfahren nach Anspruch 1, **dadurch gekennzeichnet, dass** die seitliche Ansicht an derselben Nahtstelle von derselben Kamera auf dasselbe Kamerabild aufgenommen wird, wie die Ansicht von oben, und dass beide Ansichten gemeinsam ausgewertet werden.

4. Verfahren nach Anspruch 3, **dadurch gekennzeichnet, dass** zur Erzeugung der seitlichen Ansicht mindestens ein optisches Element (30,36,43,44;50,51;67), insbesondere ein Prisma, ein Spiegel oder eine Lichtleitfaser, vorgesehen ist.

5. Verfahren nach Anspruch 3 oder 4, **dadurch gekennzeichnet, dass** zur Erzeugung der Ansicht von oben mindestens ein optisches Element (30;37,38;45,46;52;67), insbesondere ein Prisma, ein Spiegel oder eine Lichtleitfaser, vorgesehen ist.

6. Verfahren nach einem der Ansprüche 4 oder 5, **dadurch gekennzeichnet, dass** die Projektion der Linie auf die Naht (26) über das optische Element (67) erfolgt.

7. Verfahren nach einem der Ansprüche 1 bis 6, **dadurch gekennzeichnet, dass** durch den Linienprojektor mehrere Linien unterschiedlicher Intensität projiziert werden.

8. Anordnung zur Schweissnahtprüfung bei der Schweissverbindung von Blechen (6,7) entlang einer gemeinsamen Kante, wobei mindestens eine Einrichtung (2;24;71) zur Projektion mindestens einer quer über die Naht verlaufenden Linie aus Licht und eine Kamera (3;31; 35;70) und eine damit verbundene Auswerteinrichtung zur Erkennung von Fehlern in der Schweissnaht vorgesehen sind, wobei die Kamera zur Aufnahme einer Ansicht von oben auf die Schweissnaht im Bereich der Linineprojektion angeordnet ist, **dadurch gekennzeichnet, dass** eine zweite Kamera (25) vorgesehen ist, welche zur Aufnahme der Schweissnaht von der Seite im Bereich einer Linienprojektion angeordnet ist, oder dass mindestens ein optisches Element (30;36;43,44;50,51;67) vorgesehen ist, durch welches die eine oberhalb der Schweissnaht angeordnete Kamera zur Aufnahme der Ansicht von oben auch eine Seitenansicht der Schweissnaht im Bereich der Linienprojektion aufnimmt.

9. Anordnung nach Anspruch 8, **dadurch gekennzeichnet, dass** als optisches Element ein Prisma, ein Spiegel oder eine Lichtleitfaser vorgesehen ist.

10. Anordnung nach Anspruch 8 oder 9, **dadurch gekennzeichnet, dass** der Linienprojektor und das optische Element derart angeordnet sind, dass die mindestens eine Linie über das optische Element auf den Nahtbereich projizierbar ist.

## Claims

1. Method for inspecting a weld seam, in the welding together of sheet-metal blanks (6, 7) along a common edge, in which light in the form of at least one line (5) extending transversely across the seam is projected on to the blanks (6, 7) and a view of the weld seam (26) from above, captured by a camera (23, 35, 70), is evaluated, **characterized in that** a side view of the seam area is additionally captured and evaluated.

2. Method according to Claim 1, **characterized in that** the side view is captured by a second camera (25) and **in that** the images captured by both cameras (23, 25) are evaluated separately or in a common representation.

3. Method according to Claim 1, **characterized in that** the side view is captured at the same point on the seam, by the same camera, and on the same camera image, as the view from above, and **in that** both views are evaluated together.

4. Method according to Claim 3, **characterized in that** at least one optical element (30, 36, 43, 44; 50, 51; 67), in particular a prism, a mirror or an optical fibre, is provided in order to produce the side view.

5. Method according to Claim 3 or Claim 4, **characterized in that** at least one optical element (30; 37, 38; 45, 46; 52; 67), in particular a prism, a mirror or an optical fibre, is provided in order to produce the view from above.

6. Method according to Claim 4 or Claim 5, **characterized in that** the line is projected on to the seam (26) through the optical element (67).

7. Method according to any one of Claims 1 to 6, **characterized in that** a plurality of lines of different intensity are projected by the line projector.

8. Arrangement for inspecting a weld seam, in the welding together of sheet-metal blanks (6, 7) along a common edge, wherein at least one device (2; 24; 71) for projecting at least one line of light extending transversely across the seam and a camera (3; 31; 35; 70) and an evaluation unit connected thereto for detecting defects in the weld seam are provided, the camera being arranged so as to capture a view of the weld seam from above in the region of the line projection, **characterized in that** a second camera (25) is provided which is arranged so as to capture the weld seam from the side in the region of a line projection, or **in that** at least one optical element (30; 36; 43, 44; 50, 51; 67) is provided through which the single camera arranged above the weld seam to capture the view from above also captures a side view of the weld seam in the region of the line projection.

9. Arrangement according to Claim 8, **characterized in that** a prism, a mirror or an optical fibre is provided as optical element.

10. Arrangement according to Claim 8 or Claim 9, **characterized in that** the line projector and the optical element are arranged so that the line or lines can be projected through the optical element on to the seam area.

## Revendications

1. Procédé de contrôle de cordons de soudure lors de l'assemblage soudé de tôles (6, 7) le long d'un bord commun de, la lumière étant projetée sur les tôles (6, 7) sous forme d'au moins une ligne (5) s'étendant transversalement par-dessus du cordon de soudure, et une vue de dessus sur le cordon de soudure (26), enregistrée par une caméra (23, 35, 70), étant analysée, **caractérisé en ce que**, en plus, on enregistre et analyse une vue de côté de la zone du cordon de soudure.

2. Procédé selon la revendication 1, **caractérisé en ce que** la vue de côté est enregistrée par une deuxième caméra (25) et **en ce que** les images enregistrées par les deux caméras (23, 25) sont analysées séparément ou sur une représentation commune.

3. Procédé selon la revendication 1, **caractérisé en ce que** la vue de côté sur la même zone du cordon de soudure est enregistrée par la même caméra sur la même image de caméra que la vue de dessus, et **en ce que** les deux vues sont analysées conjointement.

4. Procédé selon la revendication 3, **caractérisé en ce que**, pour réaliser la vue de côté, il est prévu au moins un élément optique (30, 36, 43, 44 ; 50 , 51 ; 67), en particulier un prisme, un miroir ou une fibre optique.

5. Procédé selon la revendication 3 ou 4, **caractérisé en ce que**, pour réaliser la vue de dessus, il est prévu au moins un élément optique (30 ; 37, 38 ; 45, 46 ; 52 ; 67), en particulier un prisme, un miroir ou une fibre optique.

6. Procédé selon la revendication 4 ou 5, **caractérisé en ce que** la projection de la ligne sur le cordon de soudure (26) est effectuée par l'intermédiaire de l'élément optique (67).

7. Procédé selon l'une quelconque des revendications 1 à 6, **caractérisé en ce que** plusieurs lignes d'intensité différente sont projetées par le projecteur de lignes.

8. Système de contrôle de cordons de soudure lors de l'assemblage soudé de tôles (6, 7) le long d'un bord commun, dans lequel il est prévu au moins dispositif (2 ; 24 ; 71) pour la projection d'au moins une ligne de lumière s'éetndant transversalement par dessus-du cordon de soudure et une caméra (3 ; 31 ; 35 ; 70) et un dispositif d'analyse relié à celle-ci et destiné à détecter des défauts dans le cordon de soudure, la caméra destinée à enregistrer une vue de dessus sur le cordon de soudure étant agencée dans la zone de projection des lignes, **caractérisé en ce qu'**il est prévu une deuxième caméra (25), qui est agencée dans la zone d'une projection de lignes afin d'enregistrer une vue de côté du cordon de soudure, ou **en ce qu'**il est prévu au moins un élément optique (30 ; 36 ; 43, 44 ; 50, 51 ; 67), par l'intermédiaire duquel la caméra, agencée au-dessus du cordon de soudure et destinée à enregistrer la vue de dessus, enregistre également une vue de côté du cordon de soudure dans la zone de la proj ection des lignes.

9. Système selon la revendication 8, **caractérisé en ce que** l'élément optique prévu est un prisme, un miroir ou une fibre optique.

10. Système selon la revendication 8 ou 9, **caractérisé en ce que** le projecteur de lignes et l'élément optique sont agencés de telle sorte que la au moins une ligne peut être projetée par l'intermédiaire de l'élément optique sur la zone du cordon de soudure.
